# EUROPÄISCHE PATENTSCHRIFT

(11) **EP 1 492 214 B1**
(45) Veröffentlichungstag und Bekanntmachung des Hinweises auf die Patenterteilung: **04.07.2012**
(21) Anmeldenummer: 04405359.3
(22) Anmeldetag: 09.06.2004
(51) Int. Cl.: H02K 5/26, H02K 7/116, H02K 5/00

(54) **Aktuator**
Actuator
Actionneur

(30) Priorität: 27.06.2003 DE 20309961 U
(43) Veröffentlichungstag der Anmeldung: 29.12.2004
(73) Patentinhaber: Johnson Electric Switzerland AG, 3280 Murten (CH)
(72) Erfinder: Schori, Marc, 3250 Murten (CH)
(74) Vertreter: Störzbach, Michael Andreas

(56) Entgegenhaltungen:
- EP-A- 0 681 359
- DE-A- 10 102 516
- FR-A- 2 743 115
- FR-A- 2 743 117
- US-A- 6 028 384

## Beschreibung

Die Erfindung bezieht sich auf einen Aktuator gemäss Oberbegriff des Anspruchs 1 sowie auf eine Anordnung mit einem derartigen Aktuator.

Aktuatoren werden beispielsweise in Automobilen dazu verwendet, die Klappen der Klimaanlage einzustellen und so die Luft in gewünschtem Masse durchmischen zu können. Bekannte Aktuatoren weisen vier Fixationslöcher auf, durch welche bei der Montage je eine Schraube geführt und auf der Montagefläche festgeschraubt wird. Dies ist aber hinsichtlich Materialkosten und Montagezeit nachteilig, da bei einer Klimaanlage mehrere Aktuatoren verwendet werden (3 bis 5 bei Standardausführungen, bis zu 20 bei Luxusausführungen). Sind z.B. 15 Aktuatoren zu montieren, so müssen insgesamt 60 Schrauben fixiert werden.

Aus der FR 2 743 116 A1 ist es bekannt, Stifte und Vertiefungen vorzusehen, welche es erlauben, den Aktuator durch Aufsetzen auf eine Montagefläche gegen Verdrehung zu sichern. Zur Fixation des Aktuators wird ein Bügel verwendet, der in Ausnehmungen an den Stiften greift. Die Montage ist erschwert, da der Bügel zum Eingriff in die Ausnehmungen in geeigneter Weise gebogen werden muss.

In der FR 2 743 115 A1 wird vorgeschlagen, den Aktuator mittels U-förmiger Feder zu befestigen, indem deren Enden durch in der Montagefläche gebildete Öffnungen greifen, während in der FR 2 743 117 A1 vorgeschlagen wird, den Aktuator mit zwei Ausnehmungen zu versehen, die seitlich offen und so in aus der Montagefläche herausragende Stifte einrastbar sind. Diese beiden Befestigungsarten sind problematisch, da der Aktuator bei unzureichender Feder- bzw. Einrastkraft verrutschen kann.

Es ist eine Aufgabe der vorliegenden Erfindung, einen Aktuator zu schaffen, welcher durch eine vereinfachte Montage stabil auf einer Montagefläche befestigbar ist.

Ein erfindungsgemässer Aktuator, welcher diese Aufgabe löst, ist im Anspruch 1 angegeben. In den weiteren Ansprüchen sind bevorzugte Ausführungen sowie eine Anordnung mit einem erfindungsgemässen Aktuator angegeben.

Der erfindungsgemässe Aktuator hat den Vorteil, dass aufgrund seiner vereinfachten Montage die Montagezeit verkürzt sowie Material eingespart werden kann, was u.a. auch eine Kostenreduktion mit sich bringt.

Die Erfindung wird im Folgenden anhand eines bevorzugten Ausführungsbeispiels unter Bezugnahme auf Figuren erläutert.
Es zeigen
- Fig. 1: eine Explosionsansicht eines erfindungsgemässen Aktuators;
- Fig. 2: eine perspektivische Draufsicht des Aktuators gemäss Figur 1 in der Montageposition, jedoch ohne Gehäusedeckel und Fixationselement; und
- Fig. 3: eine perspektivische Draufsicht des Aktuators gemäss Figur 1 nach der Montage.

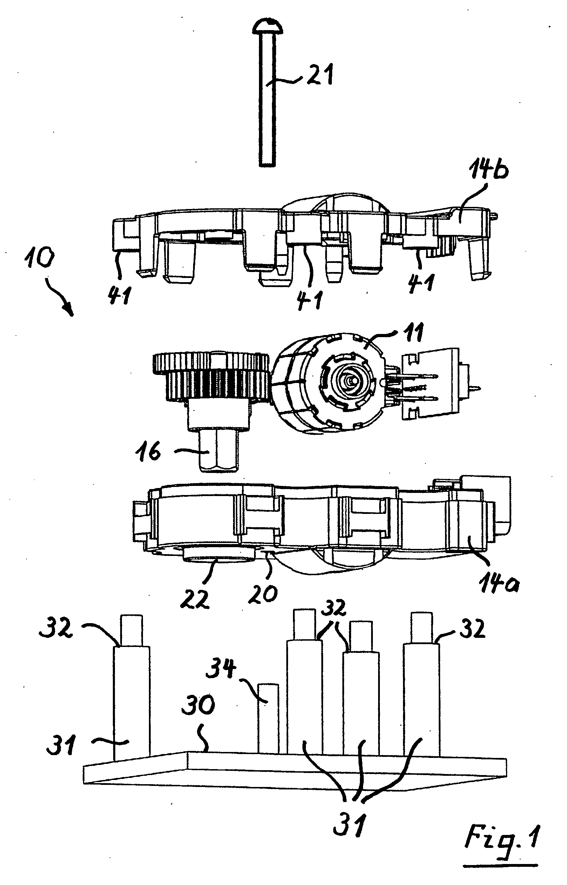

Wie Figur 1 zeigt, umfasst der Aktuator 10 u.a. einen Motor 11 sowie ein Gehäuse mit einem Boden 14a und einem Deckel 14b. Der Motor 11 ist beispielsweise ein Schrittmotor mit einer Abtriebswelle 16, welche mit einer beweglichen Komponente wie einer Klimaanlageklappe verbindbar ist. Der Gehäuseboden 14a dient als Träger für den Motor 11 sowie weiteren mechanischen bzw. elektronischen Komponenten und ist mit dem Gehäusedeckel 14b beispielsweise mittels Clipverbindungen fest verbindbar.

Der Aktuator 10 weist ein Fixationsloch 20 auf, welches durch den Deckel 14b und den Boden 14a des Gehäuses hindurchgeht, so dass z.B. eine Schraube als Fixationselement 21 durch das Fixationsloch 20 hindurchgeführt werden kann. Der Gehäuseboden 14a weist weiter eine Öffnung 22 für die Abtriebswelle 16 auf, sodass deren Ende von aussen zugänglich ist. Das Gehäuse 14a, 14b kann aus Kunststoff hergestellt sein. Aufgrund seiner relativ einfachen Geometrie ist es z.B. durch Spritzgiessen aus einem Thermoplast herstellbar.

Figur 1 zeigt weiter einen Teil der Montagefläche 30, die beispielsweise zum Gehäuse einer Automobilklimaanlage gehört. Die Montagefläche 30 weist Mittel zur Befestigung des Fixationselements 21 auf beispielsweise in Form einer Hülse 34 mit einem Innengewinde, in welche zur Fixation des Aktuators 10 das Ende des Fixationselements 21 hineingreifen kann. Weiter ist die Montagefläche 30 mit Führungselementen 31 in Form von Stiften versehen, auf welche der Aktuator 10 aufgesetzt und somit gegen ein Verdrehen gesichert werden kann. Die Führungselemente 31 sind abgestuft ausgebildet, sodass der Aktuator 10 nach der Montage auf den Stufen 32 aufliegt und das Ende der Abtriebswelle 16 die Montagefläche 30 nicht berührt. Damit die Führungselemente 31 eine stabile Basis für den Aktuator 10 bilden, sind mindestens drei Führungselemente 31 vorgesehen, die auf den Eckpunkten eines Dreiecks liegen. Je nach Anwendung können aber auch vier wie im Beispiel gemäss Figur 1 oder noch mehr Führungselemente 31 vorgesehen sein. Anordnung und Lage der Führungselemente 31 sind so gewählt, dass der Aktuator 10 bei der Montage präzise an der gewünschten Stelle zu liegen kommt.

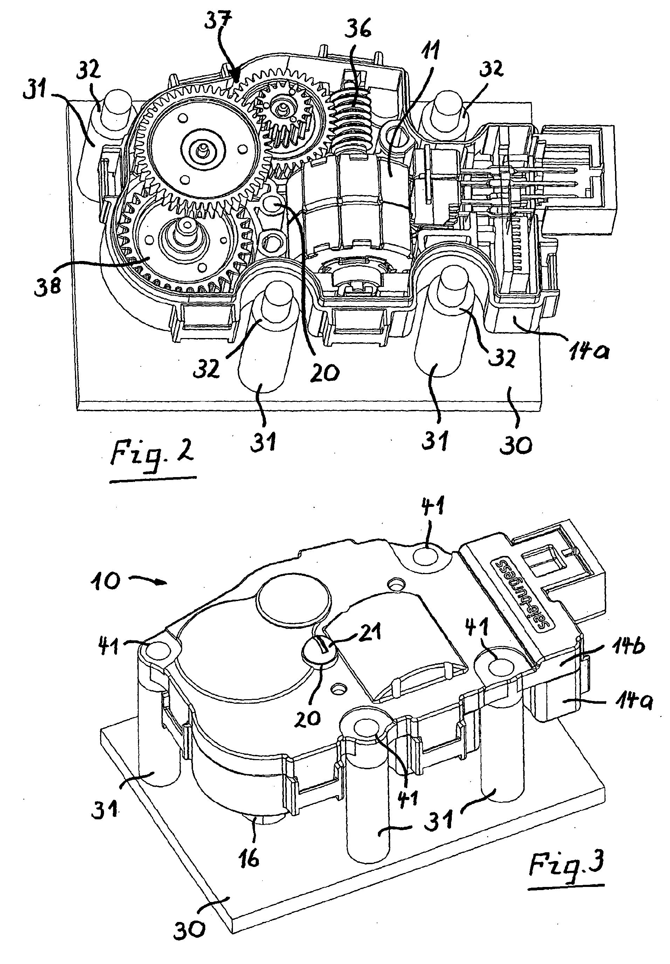

Figur 2 zeigt einen beispielhaften Innenaufbau des Aktuators 10 in der Montageposition, wobei der Gehäusedeckel 14b sowie das Fixationselement 21 zur besseren Übersicht weggelassen sind. Die im Gehäuse 14a gelagerte und durch den Motor 11 antreibbare Achse ist mit einem Schneckenrad 36 versehen. Dieses steht über verschiedene Übersetzungszahnräder 37 mit dem Stirnrad 38 in Wirkverbindung, welches mit der Abtriebswelle 16 verbunden ist.

Die Zahnräder 37, 38 und der Motor 11 sind so angeordnet, dass dazwischen genügend Platz für das Anbringen des Fixationslochs 20 vorhanden ist. Dieses befindet sich zwischen Motor 11 und Abtriebswelle 16 und somit in der Nähe der beweglichen Teile. Das hat den Vorteil, dass der Aktuator 10 auf der Montagefläche derart fest anbringbar ist, dass Vibrationen, die z.B. vom Motor 11 oder von den anderen beweglichen Teilen während des Betriebs erzeugt werden, nur reduziert auf das Gehäuse 14a, 14b oder die Montagefläche 30 übertragen werden.

Wie Figur 3 zeigt, weist der Gehäusedeckel 14b an seinem Rand Vertiefungen 41 auf, in welche das jeweilige Ende eines entsprechenden Führungselements 31 hineingeführt ist. Die Vertiefungen 41 brauchen nicht durchgehend zu sein und können alternativ auch im Gehäuseboden 14a angebracht sein. Wie Figur 3 weiter zeigt, liegen die Vertiefungen 41 auf den Eckpunkten eines Vielecks, innerhalb welchem das Fixationsloch 20 angeordnet ist. Dieses ist somit nicht am Rand des Aktuators 10, sondern möglichst zentral angeordnet, vorzugsweise im Bereich des Flächenschwerpunktes der Oberseite. Somit ist eine sichere Verbindung des Aktuators 10 mit der Montagefläche 30 mittels eines einzigen Fixationselements 21 möglich.

Der Aktuator 10 kann auf einfache und rasche Art auf der Montagefläche 30 angebracht werden:
- Der Aktuator 10 wird zuerst auf die Führungselemente 31 aufgesetzt. Diese garantieren, dass der Aktuator 10 an der gewünschten Stelle genau positioniert ist und nicht mehr verdreht werden kann.
- Dann wird das Fixationselement 21 z.B. in Form einer Schraube durch das Fixationsloch 20 geführt und an der Montagefläche 30 befestigt, sodass der Aktuator 10 gegen diese festgedrückt wird und nicht mehr herunterfallen kann. Der Aktuator 10 ist somit unverschiebbar und ohne Spiel auf der Montagefläche 30 fixiert.

Überraschenderweise hat sich gezeigt, dass diese vereinfachte Montage zu einer zuverlässigen und sicheren Verbindung des Aktuators 10 mit der Montagefläche 30 führt.

Durch die Verwendung eines einzigen Fixationselements 21 werden mögliche Deformationen des Gehäuses 14a, 14b minimiert, welche aufgrund des Druckes entstehen können, der das Fixationselement 21 auf den montierten Aktuator 10 ausübt. Dadurch ist ein zuverlässiges Funktionieren des Aktuators 10 gewährleistet.

Weiter kann die Montagezeit verkürzt sowie Material eingespart werden, da im Gegensatz zu den üblichen Aktuatoren hier nur ein Fixationselement 21 befestigt werden muss. Dies ist z.B. vorteilhaft bei Kraftfahrzeugen, bei denen für die Steuerung der Klimaanlageklappen eine Vielzahl von Aktuatoren verwendet werden.

Nebst dem Automobilbereich kann der Aktuator 10 in den verschiedensten Bereichen zur gesteuerten Betätigung von beweglichen Teilen wie Rollladen, Film, etc. eingesetzt werden.

Aus der vorangehenden Beschreibung sind dem Fachmann zahlreiche Abwandlungen zugänglich, ohne den Schutzbereich der Erfindung zu verlassen, der durch die Ansprüche definiert ist. So ist es z.B. denkbar, die Führungselemente 31 am Gehäuse 14a, 14b anzubringen und die entsprechenden Vertiefungen 41 in der Montagefläche 30.

Als Fixationselement 21 ist auch ein mit der Montagefläche 30 fest verbundener Spreizdorn verwendbar (Stift mit Schlitz, sodass sein Durchmesser durch Zusammendrücken verkleinerbar ist). Die Montage ist hier besonders einfach, da der Spreizdorn 21 lediglich durch das Fixationsloch 20 des Aktuators 10 geführt zu werden braucht.

## Patentansprüche

1. Aktuator, der auf einer Montagefläche montierbar ist, mit ersten Verdrehsicherungsmitteln (31) und zweiten Verdrehsicherungsmitteln (41), die zusammenfügbar sind, um den Aktuator durch Aufsetzen auf die Montagefläche (30) gegen Verdrehung zu sichern, **gekennzeichnet durch**
genau ein Fixationsloch (20), sodass **durch** Hindurchführen eines einzigen Fixationselements (21), insbesondere einer Schraube oder eines Spreizdorns, **durch** das Fixationsloch hindurch der Aktuator unverschiebbar mit der Montagefläche verbindbar ist.

2. Aktuator nach Anspruch 1, **dadurch gekennzeichnet, dass** die ersten Verdrehsicherungsmittel Vertiefungen (41) und die zweiten Verdrehsicherungsmittel mit der Montagefläche (30) verbundene Führungselemente (31) umfassen, welche zumindest teilweise in die Vertiefungen (41) hineinführbar sind.

3. Aktuator gemäss Anspruch 2, **dadurch gekennzeichnet, dass** die Vertiefungen (41) auf den Eckpunkten eines Vielecks liegen, innerhalb welchem das Fixationsloch (20) angeordnet ist.

4. Aktuator nach einem der Ansprüche 1 bis 3, **dadurch gekennzeichnet, dass** er einen Motor (11), insbesondere Schrittmotor, und eine Abtriebswelle (16) umfasst, wobei das Fixationsloch (20) neben dem Motor und/oder zwischen Motor und Abtriebswelle angeordnet ist.

5. Aktuator nach einem der Ansprüche 1 bis 4, **dadurch gekennzeichnet, dass** das Fixationsloch (20) im Bereich des Flächenschwerpunktes der Oberseite (14b) des Aktuators angeordnet ist.

6. Aktuator nach einem der Ansprüche 1 bis 5, **dadurch gekennzeichnet, dass** die ersten Verdrehsicherungsmittel Führungselemente (31) und die zweiten Verdrehsicherungsmittel in der Montagefläche (30) gebildete Vertiefungen umfassen, in welche die Führungselemente (31) zumindest teilweise hineinführbar sind.

7. Aktuator nach einem der Ansprüche 1 bis 6, mit genau einem Fixationselement (21) zum Hindurchführen durch das Fixationsloch (20).

8. Anordnung mit mindestens einem Aktuator nach einem der Ansprüche 1 bis 7 und einer Montagefläche insbesondere in einem Kraftfahrzeug, **dadurch gekennzeichnet, dass** der Aktuator (10) mit genau einem durch das Fixationsloch (20) geführten Fixationselement (21) mit der Montagefläche (30) unverschiebbar verbunden ist.

9. Anordnung nach Anspruch 8, **dadurch gekennzeichnet, dass** die Montagefläche (30) Führungselemente (31) aufweist, auf welche der Aktuator (10) aufgesetzt ist und welche vorzugsweise als Stifte ausgebildet sind.

## Claims

1. Actuator, which is mountable on a mounting surface, with first rotation securing means (31) and second rotation securing means (41), which can be joined together in order to secure the actuator against rotation by putting it on the mounting surface (30), **characterized by**
precisely one fixation hole (20), such that the actuator can be immovably fixed to the mounting surface by passing a single fixing element (21), in particular a screw or expanding mandrel, through the fixation hole.

2. Actuator according to claim 1, **characterized in that** the first rotation securing means comprise recesses (41) and the second rotation securing means comprise guiding elements (31), which are connected to the mounting surface (30) and insertable into the recesses (41) at least partially.

3. Actuator according to claim 2, **characterized in that** the recesses (41) are on the vertices of a polygon, inside which the fixation hole (20) is arranged.

4. Actuator according to one of the claims 1 to 3, **characterized in that** it comprises a motor (11), in particular a stepping motor, and a driven shaft (16), wherein the fixation hole (20) is arranged adjacent to the motor and/or between the motor and the driven shaft.

5. Actuator according to one of the claims 1 to 4, **characterized in that** the fixation hole (20) is arranged in the area of the geometric center of the upper side (14b) of the actuator.

6. Actuator according to one of the claims 1 to 5, **characterized in that** the first rotation securing means comprise guiding elements (31) and the second rotation securing means comprise recesses built in the mounting surface (30), into which the guiding elements (31) are at least partially insertable.

7. Actuator according to one of the claims 1 to 6, with precisely one fixation element (21) for passing it through the fixation hole (20).

8. Assembly with a least one actuator according to one of the claims 1 to 7 and a mounting surface in particular in a power-driven vehicle, **characterized in that** the actuator (10) is immovably fixed to the mounting surface (30) by means of precisely one fixing element (21) passed through the fixation hole (30).

9. Assembly according to claim 8, **characterized in that** the mounting surface (30) comprises guiding elements (31), on which the actuator (10) is put and which are preferably formed as pins.

## Revendications

1. Actionneur, qui peut être monté sur une surface de montage, comprenant des premiers moyens de blocage de rotation (31) et des deuxièmes moyens de blocage de rotation (41), qui peuvent être assemblés afin de bloquer l'actionneur contre toute rotation en plaçant celui-ci sur la surface de montage, **caractérisé par** exactement un trou de fixation (20) de sorte que l'actionneur est connectable sur la surface de montage d'une manière inamovible en passant un seul élément de fixation (21), en particulier une vis ou un mandrin expansible, à travers le trou de fixation.

2. Actionneur selon la revendication 1, **caractérisé en ce que** les premiers moyens de blocage de rotation comprennent des approfondissements (41) et les deuxièmes moyens de blocage de rotation comprennent des éléments de guidage (31) fixés sur la surface de montage (30), qui sont, au moins partiellement, insérables dans les approfondissements (41).

3. Actionneur selon la revendication 2, **caractérisé en ce que** les approfondissements (41) sont situés sur les sommets d'un polygone, dans lequel le trou de fixation (20) est agencé.

4. Actionneur selon l'une des revendications 1 à 3, **caractérisé en ce qu'**il comprend un moteur (11), en particulier un moteur pas à pas, et un arbre de sortie (16), où le trou de fixation (20) est agencé de manière adjacente au moteur et/ou entre le moteur et l'arbre de sortie.

5. Actionneur selon l'une des revendications 1 à 4, **caractérisé en ce que** le trou de fixation (20) est agencé dans la région du barycentre de la face supérieure (14b) de l'actionneur.

6. Actionneur selon l'une des revendications 1 à 5, **caractérisé en ce que** les premiers moyens de blocage de rotation comprennent des éléments de guidage (31) et les deuxièmes moyens de blocage de rotation comprennent des approfondissements formés dans la surface de montage (30), dans lesquels les éléments de guidage (31) sont, au moins partiellement, insérables.

7. Actionneur selon l'une des revendications 1 à 6, comprenant exactement un élément de fixation (21) pour introduction dans le trou de fixation (20).

8. Arrangement comprenant au moins un actionneur selon l'une des revendications 1 à 7 et une surface de montage en particulier dans un véhicule automobile, **caractérisé en ce que** l'actionneur (10) est fixé sur la surface de montage (30) d'une manière inamovible par exactement un élément de fixation (21) inséré dans le trou de fixation (20).

9. Arrangement selon la revendication 8, **caractérisé en ce que** la surface de montage (30) comprend des éléments de guidage (31), sur lesquels l'actionneur (10) est placé et qui, de préférence, ont la forme de broches.
